# EUROPEAN PATENT SPECIFICATION

(11) **EP 0 628 609 B1**
(45) Date of publication and mention of the grant of the patent: **29.04.1998**
(21) Application number: 94303611.1
(22) Date of filing: 20.05.1994
(51) Int. Cl.: C09C 3/00

(54) **An additive for a polymeric composition**
Ein Additiv für eine Polymerzusammensetzung
Un additif pour une composition de polymère

(30) Priority: 20.05.1993 GB 9310378
(43) Date of publication of application: 14.12.1994
(73) Proprietor: ECC INTERNATIONAL LIMITED, Theale, Reading, Berkshire RG7 4SA (GB)
(72) Inventor: Jeffs, David George, Trethurgy, St. Austell, Cornwall (GB)
(74) Representative: McCormack, Derek James

(56) References cited:
- EP-A- 0 005 904
- EP-A- 0 359 362

## Description

This invention concerns an improved low profile additive for thermosetting polymeric compositions which are specially adapted for forming shaped articles by sheet moulding or by bulk, or dough, moulding processes, to a process for preparing the improved additive, and to polymeric compositions (particularly thermosetting polymeric compositions) incorporating the additive.

Sheet moulding compounds (SMC) and bulk moulding compounds (BMC) generally contain a thermosetting polymeric material which may be, for example, an unsaturated polyester resin, an epoxy resin, a vinyl ester resin or a phenolic resin. In the case of the unsaturated polyester resins, the compound contains, in addition to the polyester, an unsaturated alkylbenzene cross-linking agent, for example styrene, a peroxide catalyst, a filler and a fibrous reinforcing material such as glass fibre. The moulding compounds are generally formed into shaped articles, either three-dimensional bodies or sheets, by heating the composition to a temperature in the range from 120 to 180°C and moulding the shaped article in a press at a pressure of about 4MPa.

As these moulding compounds cure, or cross-link, in the mould they tend to contract, with the result that cracks or voids can form in the body of the shaped article. There is also a tendency for the compound to withdraw slightly from the walls of the mould with the result that the surface finish of the shaped article is impaired. The reinforcing glass fibres may become partially exposed at the surfaces of the shaped article, giving the surface a rough feel and an unattractive appearance.

In order to overcome this problem an additive known as a "low profile additive" is often included in the moulding compound. In the case of unsaturated polyester resins, this is usually an elastomeric or thermoplastic polymeric material which is soluble in the cross-linking agent for the unsaturated polyester resin, but does not itself necessarily cross-link. The elastomeric or thermoplastic polymeric material may be, for example, a natural rubber, a natural rubber which has been substituted with functional groups, a synthetic rubber, an acrylic copolymer, a poly(vinyl acetate) or a copolymer of vinyl acetate. If an appropriate amount of a low profile additive of one of the above types is included in the moulding compound it is found that the low profile additive expands in the mould, and that this expansion can compensate for the contraction of the unsaturated polyester resin, with the result that the compound as a whole exhibits no shrinkage, and can even be caused to show a small net expansion. As a result, the formation of cracks or warpage in the body of the shaped articles is largely eliminated and the appearance and feel of the surfaces of the shaped articles are greatly enhanced.

A further problem which is commonly experienced with BMCs and SMCs is the sticking of the shaped articles in the moulds and difficulty in removing unwanted "flash" from the surrounds of the mould. This is usually overcome by adding to the moulding compound a mould release agent which may be a fatty acid having from 12 to 20 carbon atoms or an alkaline earth or heavy metal salt of such a fatty acid. Especially preferred for this purpose are calcium and zinc salts of stearic or palmitic acid. It has been found, however, that when a mould release agent is added to the compound the viscosity of the compound is increased, with the result that, if the compound is to be introduced efficiently into the mould, the proportion of the liquid unsaturated alkylbenzene cross-linking agent to the other components must be increased. This generally results in a deterioration in the physical properties of the cured compound.

GB-A-2179665 describes unsaturated polyester compositions which contain a filler which has been prepared by mixing an aqueous suspension of the filler with a latex, and drying the mixture to form surface-treated filler particles.

GB-A-2220666 describes a filler prepared by a process in which an aqueous suspension of carbon black is mixed with an aqueous suspension of a particulate inorganic material and a latex, and thereafter drying the mixture to form filler particles containing the carbon black. This filler may be incorporated into a glass mat reinforced polypropylene composition.

GB-A-1591335 discloses bleaching compositions which are used in combination with detergent compositions to delay the solubility of the bleaching material in the washing water. The bleaching agent is encapsulated by coating the dry bleaching agent with a coating comprising a combination of a fatty acid and a wax. A second coat, for example comprising a polyoxyethylene-polyoxypropylene copolymer is also present.

GB-A-1461511 discloses a silica flatting agent for a varnish or lacquer which comprises silica coated with a mixture of wax and a fatty acid.

GB-A-1392189 discloses a pigment, especially titanium dioxide, which is surface treated with a polylactone. Advantageously, the pigment is treated with an inorganic material before being treated with the polylactone. When the surface treated pigment is to be incorporated into a plastics composition, a lubricant (which may be magnesium stearate, zinc stearate or stearic acid) may be present.

US 5039435 discloses a die-casting powdery mould releasing agent comprising a mixture of powdery or granulated mould releasing base material composed of an inorganic compound as used for lubricant in a solid form and an organic compound giving adhesive property to the mould releasing agent. The organic material may be a metallic soap or a compound of high molecular weight. Calcium and barium stearate are examples of the soap.

According to a first aspect of the present invention, there is provided a thermosetting moulding composition comprising a thermosetting polymeric material and a coated particulate inorganic material, the coating on the particles of the inorganic material comprising a combination of a natural or synthetic polymeric material and a mould release agent which is a fatty acid having from 12 to 20 carbon atoms or a heavy metal or alkaline earth metal salt thereof, the polymeric material being present in the coating in an amount of from 1% to 10% by weight, based on the weight of dry inorganic material.

The thermosetting moulding composition containing a coated inorganic filler may be made, in accordance with a second aspect of the present invention, by a process which comprises (a) combining, in aqueous suspension, the particulate inorganic material, a natural or synthetic latex composition in an amount such as to provide a coating on the particles of the inorganic material of from 1% to 10% by weight of latex solids, based on the weight of dry inorganic material, and the mould release agent which is a fatty acid having from 12 to 20 carbon atoms or a heavy metal or alkaline earth metal salt thereof, and dewatering and drying the resultant mixture to form the particulate inorganic material; and (b) combining the coated inorganic material with a thermosetting polymeric material. Drying may be performed using a spray drier which may result in hollow microspheres having diameters up to 0.5mm in size, and preferably no smaller than 0.02mm. The spray dried product may be pulverized, if desired.

If desired, the coating on the inorganic material may include a pigmentary material, i.e. a pigment or dye, which confers an intense coloration on the coated inorganic filler which coloration may be, for example, black, grey or a primary colour. This may be achieved by adding to the aqueous suspension from which the coated inorganic filler is prepared from 0.5% to 5% by weight of the said pigmentary material.

The particulate inorganic material may be chosen from a kaolinitic clay, e.g. kaolin or ball clay, a calcined kaolinitic clay, calcium carbonates, aluminium silicates, such as feldspar and nepheline syenite, calcium silicates, e.g. the natural calcium silicate known as wollastonite, bauxite, talc, mica, alumina trihydrate, silica, carbonates and hydroxides of magnesium, e.g. natural hydrotalcite, dolomite, i.e. the natural double carbonate of calcium and magnesium, calcium sulphate, e.g. gypsum and anhydrite, titanium dioxide and mixtures of any two or more of these. Feldspar is an especially preferred inorganic material. The inorganic material may be natural or synthetic, and, in particular, both natural and synthetic forms of calcium carbonate, silicates of aluminium and calcium, silica, carbonates and hydroxides of magnesium, calcium sulphate and titanium dioxide are within the scope of this invention. Where the inorganic material is synthetic it may be precipitated as in the case of calcium carbonate, silica and titanium dioxide. The inorganic materials specified above are commonly regarded as "white" inorganic materials; but the term "white" does not necessarily mean that the mineral has a pure white colour, but that the colour is substantially free of any strong non-white hue. Many of the inorganic materials which may be employed in the present invention are crystalline.

Preferably the particles of the inorganic material are no larger than about 100µm, more preferably no larger than 50µm, and most preferably no larger than 20µm. The specific surface area of the inorganic material as measured by the BET nitrogen absorption method is preferably at least at least 1m²g⁻¹ and preferably no more than about 300m²g^{-1.} Most preferably the specific surface area of the inorganic material is in the range from 2 to 10m²g⁻¹.

The natural or synthetic polymeric material forming the coating on the particles is desirably one derived from a natural or synthetic latex, and may be elastomeric or non-elastomeric. Preferably, although not essentially, it is poly(vinyl acetate), which is non-elastomeric.

In the process of the present invention, the particulate inorganic material is preferably provided in the form of an aqueous suspension containing up to 65% by weight of the dry inorganic material and preferably at least 50% by weight, although it should be appreciated that suspensions having as little as 20% by weight of the dry inorganic material can be used and these may not require a dispersing agent. This suspension may be dispersed with the aid of a dispersing agent, for example from about 0.05% to about 0.5% by weight, based on the weight of the dry inorganic material, of a dispersing agent for the inorganic material. The dispersing agent for the inorganic material is preferably a water soluble salt of a poly(acrylic acid) or of a poly(methacrylic acid) having a number average molecular weight of not more than 10,000.

The natural or synthetic latex composition may advantageously comprise a latex of a thermoplastic, non-elastomeric material such as poly(vinyl acetate) or a copolymer of vinyl acetate. Alternatively the latex composition may comprise a latex of an elastomer, for example a natural rubber or a natural rubber which has been substituted with functional groups or a synthetic rubber such as a styrene butadiene rubber (SBR). Other suitable latices include those formed from elastomeric or non-elastomeric acrylic copolymers and homopolymers, the non-elastomeric homopolymers and the elastomeric copolymers being preferred. Advantageously the acrylic copolymer comprises a lower alkyl (C₁₋₄) ester of acrylic acid and a lower alkyl (C₁₋₄) ester of methacrylic acid; especially preferred is a copolymer of ethyl acrylate and methyl methacrylate. Also especially preferred are the non-elastomeric acrylic homopolymers such as polystyrene and poly(methyl methacrylate). Also suitable are copolymers of lower alkyl (C₁₋₄) acrylic esters with vinyl acetate, styrene or acrylonitrile. The latex composition is a stabilised suspension of polymer particles in water and will generally contain about 40% to 60% by weight of solids. The latex may be stabilised with the aid of a surfactant or a water-soluble colloid.

The amount of the mould release agent used is preferably from 0.5% by weight to 5.0% by weight, based on the weight of the dry particulate inorganic material. The mould release agent is preferably a calcium, magnesium or zinc salt of stearic or palmitic acid and is preferably added in the form of an aqueous suspension which generally contains from 20 to 40% by weight of the (dry) mould release agent and which usually contains a dispersing agent as well. Zinc stearate is especially preferred. A further example of an effective mould release agent is lauryl lycine.

The filler of the invention is especially suitable for inclusion in an unsaturated polyester moulding compound, but may also be used in compounds containing epoxy resins, vinyl ester resins or phenolic resins.

In the process aspect of the present invention, the order in which the suspension of the inorganic material, the suspension or solution of the pigmentary material, if used, the latex and the mould release agent are added together is unimportant. For example the suspension of the inorganic material and mould release agent can be mixed with the suspension or solution of the pigmentary material, if used, and the latex added to the suspension thus formed. Alternatively the suspension of the inorganic material and mould release agent may be mixed with the latex and the suspension or solution of the pigmentary material added to the mixture thus formed. Instead of mixing the mould release agent with the suspension of the inorganic material, it may alternatively be mixed with the latex or with the suspension or solution of the pigmentary material, or it may be added last to the suspension of inorganic material, latex, and pigmentary material, if used. However, it is generally preferred to add the latex to the composition last, as the latex is the least stable component and the most likely to cause rheological problems.

The present invention also provides a thermosetting moulding composition incorporating the coated inorganic material.

Furthermore, the present invention relates to moulded components, for example components for automobiles, made from the thermosetting moulding composition of the present invention.

For a better understanding of the present invention, and to show how the same may be put into effect, reference will now be made to the following example.

### EXAMPLE

A ground natural chalk having a particle size distribution such that 60% by weight consisted of particles having an equivalent spherical diameter smaller than 2µm was suspended in water containing 0.1% by weight, based on the weight of dry chalk, of a sodium polyacrylate dispersing agent having a number average molecular weight of about 4,000, the chalk being in a quantity sufficient to give a suspension containing 60% by weight of dry chalk. There was then mixed with this suspension sufficient of a suspension containing 40% by weight of zinc stearate in water to provide 2.2% by weight of dry zinc stearate, based on the weight of dry chalk. The suspension of zinc stearate also contained a wetting agent for the zinc stearate. Finally there was added to the mixed suspension of chalk and zinc stearate sufficient of a latex containing 50% by weight of poly(vinyl acetate) in water to provide 6.5% by weight of poly(vinyl acetate) solids, based on the weight of dry chalk. The components of the mixture were thoroughly mixed together, and the mixed suspension was then spray dried in a spray drier to form hollow microspheres about 100µm in diameter. This filler product is referred to below as the treated filler.

Two unsaturated polyester pastes were prepared according to the formulations given in Table 1 below:

**Table 1**

| Ingredient | Parts by Weight | |
|---|---|---|
| | Comparative | Invention |
| Unsaturated Polyester Resin | 36.4 | 36.4 |
| Low Profile Additive | 15.0 | - |
| Styrene Monomer | 8.6 | 17.6 |
| Treated Filler | - | 100.0 |
| Untreated Filler | 92.0 | - |
| Zinc Stearate | 2.0 | - |

An unsaturated polyester paste is a composition which is prepared as a precursor for an unsaturated polyester moulding compound. A catalyst and chopped glass fibres for reinforcement must be added before a shaped article is moulded from the compound. The unsaturated polyester resin comprised a mixture of polyester monomers consisting essentially of about 50% by weight of propylene glycol, about 25% by weight of maleic anhydride and about 25% by weight of phthalic anhydride. The low profile additive was a solution containing 40% by weight of poly(vinyl acetate) in styrene. The viscosity reducing agent was a wetting agent for the polyester resin. The untreated filler was the same ground natural chalk as was used for preparing the treated filler. The total amounts of styrene were the same in the two polyester pastes and the amounts of zinc stearate and poly(vinyl acetate) present in the "Comparative" polyester paste were the same as the amounts which were included in the treated filler of the "Invention" polyester paste.

The viscosity of each of the two pastes was measured at a series of different shear rates using a Carrimed Viscometer. The results are set forth in Table 2 below:-

**Table 2**

| Shear Rate (sec⁻¹) | Viscosity (mPa.s) | |
|---|---|---|
| | Comparative | Invention |
| 1 | 47,000 | 35,000 |
| 2 | 42,000 | 31,000 |
| 3 | 39,000 | 29,500 |
| 4 | 36,500 | 27,800 |
| 6 | 34,000 | 26,200 |
| 8 | 32,500 | 25,500 |
| 10 | 31,500 | 24,800 |

It can be seen that the viscosity of the polyester paste is considerably lower, over a wide range of shear rates, when the zinc stearate mould release agent is incorporated in the low-profile filler than when it is added separately to the compound.

## Claims

1. A thermosetting moulding composition comprising a thermosetting polymeric material and a coated particulate inorganic material, the coating on the particles of the inorganic material comprising a combination of a natural or synthetic polymeric material and a mould release agent which is a fatty acid having from 12 to 20 carbon atoms or a heavy metal or alkaline earth metal salt thereof, the polymeric material being present in the coating in an amount of from 1% to 10% by weight, based on the weight of dry inorganic material.

2. A thermosetting moulding composition according to claim 1, wherein the inorganic material is a kaolinitic clay, a calcined kaolinitic clay, a calcium carbonate, a silicate of aluminium and/or calcium, bauxite, talc, mica, alumina trihydrate, silica, a carbonate or hydroxide of magnesium, a double carbonate of calcium and magnesium, calcium sulphate, or titanium dioxide.

3. A thermosetting moulding composition according to claim 1 or 2, wherein the inorganic material has a particle size no larger than about 100 µm.

4. A thermosetting moulding composition according to claim 1, 2 or 3, wherein the specific surface area of the inorganic material, as measured by the BET nitrogen absorption method, is from 1 m²g⁻¹ to 300 m²g⁻¹.

5. A thermosetting moulding composition according to any preceding claim, wherein the polymeric material is poly(vinyl acetate).

6. A thermosetting moulding composition according to any preceding claim, wherein the coating further comprises a pigment or dye.

7. A thermosetting moulding composition according to any preceding claim, wherein the mould release agent is a calcium, magnesium or zinc salt of stearic or palmitic acid.

8. A thermosetting moulding composition according to any preceding claim, wherein the thermosetting polymeric material is selected from an unsaturated polyester resin, an epoxy resin, a vinyl ester resin or a phenolic resin.

9. A thermosetting moulding composition according to claim 8, wherein the thermosetting polymeric material is an unsaturated polyester resin.

10. A process for preparing a thermosetting moulding composition containing a coated particulate inorganic material according to any one of claims 1 to 9, which process comprises (a) combining, in aqueous suspension, a particulate inorganic material, a natural or synthetic latex composition in an amount such as to provide a coating on the particles of the inorganic material of from 1% to 10% by weight of latex solids, based on the weight of dry inorganic material, and a mould release agent which is a fatty acid having from 12 to 20 carbon atoms or a heavy metal or alkaline earth metal salt thereof, and dewatering and drying the resultant mixture to form the particulate inorganic material; and (b) combining the coated inorganic material with a thermosetting polymeric material.

## Patentansprüche

1. Wärmehärtbare Formmasse, umfassend ein wärmehärtbares Polymermaterial und ein beschichtetes teilchenförmiges anorganisches Material, wobei die Beschichtung der Teilchen des anorganischen Materials eine Zusammenstellung umfasst aus einem natürlichen oder synthetischen Polymermaterial und einem Entformungsmittel, welches eine Fettsäure ist mit 12 bis 20 Kohlenstoffatomen oder ein Schwermetall- oder Erdalkalimetallsalz davon, wobei das Polymermaterial in der Beschichtung in einer Menge von 1 bis 10 Gew.% vorkommt, bezogen auf das Gewicht des trockenen anorganischen Materials.

2. Wärmehärtbare Formmasse nach Anspruch 1, wobei das anorganische Material ein Kaolinit-Ton ist, ein kalzinierter Kaolinit-Ton, ein Calciumcarbonat, ein Aluminium- und/oder Calciumsilikat, Bauxit, Talk, Mica, Aluminiumoxid-trihydrat, Siliciumoxid, ein Magnesiumcarbonat oder Magnesiumhydroxid, ein Calcium- und Magnesiumbicarbonat, Calciumsulfat oder Titandioxid.

3. Wärmehärtbare Formmasse nach Anspruch 1 oder 2, wobei die Teilchengröße des anorganischen Materials nicht über etwa 100 µm ist.

4. Wärmehärtbare Formmasse nach Anspruch 1, 2 oder 3, wobei die spezifische Oberfläche des anorganischen Materials, bestimmt mit dem BET-Stickstoff-Adsorptionsverfahren, von 1 m²g⁻¹ bis 300 m²g⁻¹ ist.

5. Wärmehärtbare Formmasse nach einem der vorstehenden Ansprüche, wobei das Polymermaterial Polyvinylacetat ist.

6. Wärmehärtbare Formmasse nach einem der vorstehenen Ansprüche, wobei die Beschichtung weiter ein Pigment oder einen Farbstoff enthält.

7. Wärmehärtbare Formmasse nach einem der vorstehenden Ansprüche, wobei das Entformungsmittel ein Calcium-, Magnesium- oder Zinksalz der Stearin- oder Palmitinsäure ist.

8. Wärmehärtbare Formmasse nach einem der vorstehenden Ansprüche, wobei das wärmehärtbare Polymermaterial ausgewählt ist aus einem ungesättigten Polyesterharz, einem Epoxyharz, einem Vinylesterharz oder einem Phenolharz.

9. Wärmehärtbare Formmasse nach Anspruch 8, wobei das wärmehärtbare Polymermaterial ein ungesättigtes Polyesterharz ist.

10. Verfahren zur Herstellung einer wärmehärtbaren Formmasse, die ein beschichtetes teilchenförmiges anorganisches Material nach einem der Ansprüche 1 bis 9 enthält, umfassend:
(a) Zusammenbringen in wässriger Suspension ein teilchenförmiges anorganisches Material; eine natürliche oder synthetische Latex-Zusammensetzung in einer Menge, so dass die Teilchen des anorganischen Materials eine Beschichtung erhalten mit 1 bis 10 Gew.% Latex-Teilchen, bezogen auf das Gewicht des trockenen anorganischen Materials; und ein Entformungsmittel, welches eine Fettsäure ist mit 12 bis 20 Kohlenstoffatomen oder ein Schwermetall- oder Erdalkalimetallsalz davon; und Entwässern und Trocknen der resultierenden Mischung, wobei das teilchenförmige anorganische Material entsteht; und
(b) Zusammenbringen des beschichteten anorganischen Materials mit einem wärmehärtbaren Polymermaterial.

## Revendications

1. Composition de moulage thermodurcissable comprenant un matériau polymère thermodurcissable et un matériau minéral particulaire enrobé, l'enrobage des particules de matériau minéral comprenant une combinaison d'un matériau polymère naturel ou synthétique et d'un agent de démoulage qui est un acide gras comportant 12 à 20 atomes de carbone ou bien un de ses sels de métal lourd ou de métal alcalino-terreux, la quantité du matériau polymère présent dans l'enrobage représentant 1% à 10% en poids, par rapport au poids du matériau minéral sec.

2. Composition de moulage thermodurcissable selon la revendication 1, dans laquelle le matériau minéral est une argile kaolinique, une argile kaolinique calcinée, un carbonate de calcium, un silicate d'aluminium et/ou de calcium, de la bauxite, du talc, du mica, du trihydrate d'alumine, de la silice, un carbonate ou un hydroxyde de magnésium, un carbonate double de calcium et de magnésium, du sulfate de calcium ou du dioxyde de titane.

3. Composition de moulage thermodurcissable selon la revendication 1 ou 2, dans laquelle le matériau minéral possède une granulométrie ne dépassant pas environ 100 µm.

4. Composition de moulage thermodurcissable selon la revendication 1, 2 ou 3, dans laquelle la surface spécifique du matériau minéral, mesurée selon le procédé BET d'absorption d'azote, varie de 1 m²g⁻¹ à 300 m²g⁻¹.

5. Composition de moulage thermodurcissable selon l'une quelconque des revendications précédentes, dans laquelle le matériau polymère est le poly(acétate de vinyle).

6. Composition de moulage thermodurcissable selon l'une quelconque des revendications précédentes, dans laquelle l'enrobage comprend en outre un pigment ou un colorant.

7. Composition de moulage thermodurcissable selon l'une quelconque des revendications précédentes, dans laquelle l'agent de démoulage est un sel de calcium, de magnésium ou de zinc de l'acide stéarique ou palmitique.

8. Composition de moulage thermodurcissable selon l'une quelconque des revendications précédentes, dans laquelle le matériau polymère thermodurcissable est choisi parmi une résine de polyester insaturé, une résine époxy, une résine d'ester vinylique ou une résine phénolique.

9. Composition de moulage thermodurcissable selon la revendication 8, dans laquelle le matériau polymère thermodurcissable est une résine de polyester insaturé.

10. Procédé de préparation d'une composition de moulage thermodurcissable contenant un matériau minéral particulaire enduit selon l'une quelconque des revendications 1 à 9, ce procédé consistant (a) à combiner, dans une suspension aqueuse, un matériau minéral particulaire, une composition de latex naturel ou synthétique en quantité telle qu'elle fournit un enrobage des particules avec le matériau minéral à raison de 1 à 10% en poids de matières solides de latex, par rapport au poids du matériau minéral sec, et un agent de démoulage qui est un acide gras comportant de 12 à 20 atomes de carbone ou bien un de ses sels de métal lourd ou de métal alcalino-terreux, puis à égoutter et à sécher le mélange résultant pour former le matériau minéral particulaire; et (b) à combiner le matériau minéral enrobé avec un matériau polymère thermodurcissable.
